# EUROPÄISCHE PATENTANMELDUNG

(11) **EP 1 777 502 A2**
(43) Veröffentlichungstag der Anmeldung: **25.04.2007**
(21) Anmeldenummer: 06021991.2
(22) Anmeldetag: 20.10.2006
(51) Int. Cl.: G01F 1/66

(54) **Schaltkreis mit LC-Filterung zur Ansteuerung von Ultraschallwandlern**

(30) Priorität: 24.10.2005 DE 102005051119; 24.10.2005 DE 102005051160
(71) Anmelder: Hydrometer GmbH, 91522 Ansbach (DE)
(72) Erfinder: Gaugler, Ulrich, 91746 Weidenbach (DE); Ziegler, Horst, Prof. Dr., 33100 Paderborn (DE); Behlen, Horst, 33175 Lippspringe (DE)
(74) Vertreter: Stippl, Hubert

(57) **Zusammenfassung**

Die Erfindung betrifft eine Anordnung zur Signalverarbeitung in Ultraschallwandlern in Durchflussmessgeräten, bei welcher der Ultraschallwandler mit einem Steuer-Signal beaufschlagt wird, wobei der Ultraschallwandler (6) mit einer auf die Frequenz des Steuer-Signals abgestimmten Resonanzschaltung (8, 10) verbunden ist.

Die Resonanzschaltung kann insbesondere Bestandteil eines Netzwerks (10) sein, welches eine Umschaltung eines Ultraschallwandlers (12, 13) vom Sende- in den Empfangsbetrieb ermöglicht.

Die vorliegende Erfindung betrifft weiterhin einen Ultraschalldurchflussmesser nach dem Laufzeitprinzip mit einer Messstrecke, Mittel zum Aussenden und Empfangen von Ultraschallsignalen sowie Mittel zur Signalweiterverarbeitung der empfangenen Ultraschallsignale. Zur Lösung der erfindungsgemäßen Aufgabe, einen Ultraschalldurchflussmesser zur Verfügung zu stellen, welcher ein in seiner Güte verbessertes Spannungssignal für die Auswertung zur Verfügung stellt und gleichzeitig eine Reduzierung seiner Herstellungskosten ermöglicht, ist ein Schwingkreis, insbesondere Serienschwingkreis (1) als Mittel zur Signalweiterverarbeitung der empfangenen Ultraschallsignale vorgesehen, wobei der Schwingkreis mit einem Komparator (5) in Verbindung steht. Der Schwingkreis realisiert zweckmäßigerweise eine LC-Schaltung, ein Pi-Filter (6) oder eine RLC-Schaltung.

## Beschreibung

Die Erfindung betrifft eine Anordnung zur Ansteuerung von Ultraschallwandlern in Durchflussmessgeräten, bei welcher der Ultraschallwandler mit einem Sinussignal beaufschlagt wird.

Aus der DE 100 48 959 C2 ist eine derartige Anordnung bekannt, bei welcher der nicht-invertierende Eingang eines Operationsverstärkers mit einem Sinussignal angesteuert wird, während mit dem invertierenden Eingang wahlweise über einen Umschalter einer von zwei Ultraschallwandlern verbunden werden kann.

Bei einer Wandleransteuerung aus einem Digitalbaustein besteht jedoch das Problem, dass die Erzeugung eines Sinussignals auf digitalem Wege sehr aufwändig ist. Bei einer Ansteuerung des Wandlers mit einem Rechtecksignal stören andererseits die Oberwellenanteile, die den Wandler gleichzeitig anregen und somit von ihm mit übertragen werden, so dass Verfälschungen des Messsignals auftreten. Außerdem ist die Ansteuerung eines solchen Wandlers mit einem Signal, dass einen Gleichspannungsanteil enthält, unerwünscht, was bei kurzen Bursts der Fall ist, da ein ruhendes Signal typischerweise einen Mittelwert bei einer der Betriebsspannungsgrenzen hat und der Mittelwert des Burstssignals zwischen den Betriebsspannungsgrenzen liegt, so dass hier eine Sprungfunktion überlagert ist.

Der Erfindung liegt die Aufgabe zugrunde, eine Anordnung zur Ansteuerung von Ultraschallwandlern in Durchflussmessgeräten zu beschaffen, welche sowohl kostengünstig ist als auch den Wandlerbetrieb mit nur geringen Messfehlern erlaubt.

Diese Aufgabe wird durch die im Anspruch 1 angegebenen Merkmale gelöst. Weiterbildungen der Erfindung sind in den Unteransprüchen gekennzeichnet. Vorzugsweise lässt sich gemäß der Erfindung bei einer Ansteuerung von Ultraschallwandlern aus einem Digitalbaustein heraus mit Hilfe einer Resonanzschaltung, vorzugsweise in Form eines LC-Schwingkreises, sowohl eine Filterung des ansteuernden Sinussignals wie auch eine Gleichspannungsunterdrückung erreichen.

Vorteilhaft ist bei der Erfindung insbesondere die Herausfilterung von Oberwellen aus dem Ansteuersignal, ferner die Unterdrückung von Gleichspannungskomponenten am Wandler durch Parallelschaltung der Schwingkreisspule. Weiterhin lässt sich die Effizienz des Übertragungsweges verbessern, weil die Kapazität des Zuleitungskabels zum Wandler wie auch des Wandlers selbst bei der Berechnung des LC-Gliedes berücksichtigt werden kann. Infolge der Filterwirkung des LC-Gliedes lässt sich auch das Rauschverhalten und somit die Güte des Empfangssignals wesentlich verbessern.

Die vorliegende Erfindung betrifft des Weiteren - auch nebengeordnet beansprucht - eine Anordnung zur Signalverarbeitung in einem Ultraschalldurchflussmesser nach dem Laufzeitprinzip. Die Besonderheit dieser Ausgestaltung der Erfindung besteht darin, dass zur Ansteuerung einer Ultraschallwandleranordnung ein Netzwerk vorgesehen ist. Die Wandleranordnung umfasst einen ersten Ultraschallwandler und einen zweiten Ultraschallwandler. Ferner sind Schaltmittel vorgesehen, mittels denen erster und zweiter Ultraschallwandler wahlweise entweder in einen Sendebetrieb oder Empfangsbetrieb schaltbar sind und das Netzwerk einen elektrischen Schwingkreis aufweist, der im Sende- sowie Empfangsbetrieb des jeweiligen Ultraschallwandlers als Frequenzfilter wirkt. Zudem gewährleistet die vorbeschriebene Ausgestaltung im Empfangsbetrieb des jeweiligen Ultraschallwandlers eine Verstärkung des vom Ultraschallwandler erzeugten elektrischen Signals.

Die vorstehende Erfindung ermöglicht es zum einen, die Anzahl von unerwünschten Oberwellenanteilen eines von einem Digitalbaustein kommenden digitalen Rechtecksignals als Steuersignal weitestgehend zu unterdrücken und hierdurch unerwünschte Schallwellenbestandteile im Wasser zu vermeiden. Darüber hinaus können Ultraschallwandler sowohl im Sende- als auch im Empfangsmodus betrieben werden, wobei die Richtungsentscheidung für das Ultraschallsignal in Abhängigkeit der Reihenfolge, in der die beiden Ultraschallwandler-Stränge kurzgeschlossen werden, erfolgt. Das Netzwerk dient hierbei im Sendebetrieb des betreffenden Ultraschallwandlers dazu, durch den vom Netzwerk umfassten Schwingkreis eine Frequenzbandselektion bzw. Bandbreitenselektion vorzunehmen und gleichzeitig eine Erhöhung der am Komparator anstehenden Spannung im Vergleich zur Spannung des Ultraschallwandlers mit einfachen Bauteilen zu gewährleisten.

Zweckmäßigerweise ist zur Umsetzung des Schwingkreises jedem Ultraschallwandler ein C-Glied zugeordnet und zudem ein gemeinsames L-Glied vorgesehen, so dass das jeweilige C-Glied und das L-Glied je nach Schaltzustand einen Schwingkreis bilden. Eine solche Schaltung ist ebenfalls mit schaltungstechnisch einfachen Mitteln zu realisieren.

Zweckmäßigerweise sind die Schaltmittel einem jeden Ultraschallwandler unmittelbar zugeordnet.

Eine wirkungsvolle Reduzierung von Verlusten wird gewährleistet, indem das Netzwerk über eine T-Schaltung mit der Signalleitung und mit einem Eingang des Komparators in Verbindung steht, die Verlängerung des senkrechten Zweigs der T-Schaltung das L-Glied aufweist und der jeweilige quer verlaufende Teil der T-Schaltung das jeweilige C-Glied, den Schalter sowie den zugehörigen Ultraschallwandler aufweist. Je nach Schaltstellung bilden somit das jeweilige C-Glied mit dem aktiven Ultraschallwandler eine Serien- oder Parallelschaltung. Das L-Glied ergänzt die Kapazitäten zu einem Schwingkreis.

Zur Optimierung, d. h. zum Abgleich der vorstehend beschriebenen Anordnung weist das Netzwerk zusätzlich ein weiteres C-Glied auf, welches zum L-Glied parallel geschaltet ist. Hierdurch ergeben sich größere Freiheiten bei der Dimensionierung der C-Glieder in der T-Schaltung.

Das Netzwerk ist zweckmäßigerweise so ausgelegt, dass es in Resonanz mit der Grundwelle eines Ansteuersignals des Netzwerks über die Signalleitung ist, um einen optimalen Selektionseffekt zu erreichen.

Gemäß einer weiteren Ausgestaltung der vorliegenden Erfindung liegt zur Ansteuerung des Komparators eine symmetrische Spannung an den Eingängen des Komparators an, wobei die Gesamtamplitude der Eingangsspannung im Vergleich zur Eingangsspannung am Netzwerk sich erhöht bzw. verdoppelt.

Konkret weist die vorbeschriebene Anordnung eine Serienschaltung eines zusätzlichen C-Glieds und L-Glieds auf. Die Serienschaltung ist hierbei parallel zum C-Glied und dem L-Glied (der Verlängerung des senkrechten Zweigs der T-Schaltung) geschaltet. Der zweite Eingang des Komparators wird über die Serienschaltung angesteuert. Die Serienschaltung bewirkt zum einen eine Spannungsverstärkung durch Impedanztransformation und zum anderen die Möglichkeit der Konvertierung der Vorzeichen der Spannung im Bereich der Zuführung zum Komparator.

Vorzugsweise handelt es sich bei dem Netzwerk um ein passives Netzwerk mit Reziprozität im Hinblick auf den Sendebetrieb oder Empfangsbetrieb eines Ultraschallwandlers.

Die vorliegende Erfindung betrifft schließlich einen Ultraschalldurchflussmesser nach dem Laufzeitprinzip mit einer Messstrecke, Mittel zum Aussenden und Empfangen von Ultraschallsignalen, sowie Mittel zur Signalweiterverarbeitung der empfangenen Ultraschallsignale.

Die über die Messstrecke an den Wandlern ankommenden Ultraschallwellen werden in elektrische Spannungssignale umgewandelt. Da die Betriebsspannung der Wandler für eine weitere Auswertung der Signale zu niedrig ist, werden die Spannungssignale erhöht und der weiteren Signalauswertung zugeführt. Zur Spannungserhöhung werden üblicherweise integrierte Halbleiterbauelemente eingesetzt, welche verschiedene Nachteile aufweisen. Sie besitzen zum einen Nichtlinearitäten, welche das Messergebnis nachteilig beeinflussen können zum anderen wird neben dem auszuwertenden Spannungssignal auch das Rauschen erhöht. Darüber hinaus sind derartige Halbleiterbauelemente vergleichsweise teuer. Zusätzlich ist mit den Halbleiterbauelementen auch immer ein höherer Stromverbrauch verbunden.

Der vorliegenden Erfindung liegt die Aufgabe zugrunde, einen Ultraschalldurchflussmesser zur Verfügung zu stellen, welcher ein in seiner Güte verbessertes Spannungssignal für die Auswertung zur Verfügung stellt und gleichzeitig eine Reduzierung seiner Herstellkosten ermöglicht.

Die vorstehende Aufgabe wird bei dem gattungsgemäßen Ultraschalldurchflussmesser dadurch gelöst, dass als Mittel zur Signalweiterverarbeitung der empfangenen Ultraschallsignale ein Schwingkreis vorgesehen ist und der Schwingkreis mit einem Komparator oder Operationsverstärker in Verbindung steht. Der Erfindung liegt der Gedanke zugrunde, einen Frequenzbereich in Abhängigkeit der dem Schwingkreis eigenen Resonanzfrequenz zu selektieren und lediglich eine Verstärkung dieses Frequenzbereichs vorzunehmen. Hierdurch werden die dem Nutzsignal zuzuordnenden Frequenzbereiche hervorgehoben und die nicht dem Nutzsignal zuzuordnenden Frequenzbereiche, wie z. B. das Rauschen, unterdrückt. Lediglich die hierdurch selektierten Nutzsignalfrequenzanteile werden der Verstärkung zugeführt. Damit wird die Güte des der weiteren Signalauswertung zugeführten Spannungssignals im Vergleich zum Stand der Technik wesentlich verbessert, gleichzeitig sind die schaltungstechnischen Vorkehrungen zur Gewährleistung des Schwingkreises im Vergleich zu den bisher verwendeten Halbleiterbauelementen mit geringeren Kosten zu realisieren.

Zur Umsetzung der Erfindung sind vorzugsweise LC- (Induktivitäts-, Kapazitäts-Kombinationen) oder RLC-Schaltungen (Widerstands-, Induktivitäts-, Kapazitäts-Kombinationen) einzusetzen, die je nach Schaltung einen Serienkreis, einen Parallelkreis oder ein P1-Filter bilden. Das Ausgangssignal kann in vorteilhafter Weise von den beiden Anschlüssen der Induktivität abgenommen werden. Hier tritt die durch Resonanz überhöhte Ausgangsspannung auf und außerdem ist auf diese Weise die gleiche DC-Vorspannung an den beiden Komparatoreingängen gewährleistet.

Alle drei Schaltungen haben ihre spezifischen Eigenschaften bezüglich Spannungs-Überhöhung an der Induktivität, der Widerstandsbelastung durch die treibende Spannungsquelle bzw. die Ausgangslast und die Rauschbandbegrenzung. Außerdem sind bei allen drei Schaltungen nicht nur die real eingebauten Widerstände sondern auch die Verlustwiderstände der Induktivitäten und Kapazitäten zu berücksichtigen.

Allen Schaltungen ist auch gemeinsam, dass die Resonanzfrequenz durch die Werte und Konfiguration der Induktivitäten und Kapazitäten und in geringerem Masse auch von allen reellen Widerständen bestimmt ist und gezielt dimensioniert werden kann.

Zweckmäßige Ausgestaltungen der vorliegenden Erfindung werden nachstehend anhand der Zeichnungen näher erläutert. Es zeigen
- Fig. 1: Ein erstes Ausführungsbeispiel der Erfindung, bei welchem die mit dem Ultraschallwandler verbundene Resonanzschaltung als Parallelschwingkreis ausgebildet ist,
- Fig. 2: ein weiteres Ausführungsbeispiel der Resonanzschaltung als Reihenschwingkreis,
- Fig. 3: ein Beispiel für die wahlweise Anschaltung der als Parallelschwingkreis ausgebildeten Resonanzschaltung an jeweils einen von mehreren Ultraschallwandlern,
- Fig. 4: ein weiteres Ausführungsbeispiel der Erfindung, bei der zur Ansteuerung einer Ultraschallwandleranordnung ein Netzwerk vorgesehen ist,
- Fig. 5: eine Weiterentwicklung des Ausführungsbeispiels der Erfindung gemäß Fig. 4, bei der im Ansteuerbereich des Komparators eine zusätzliche Serienschaltung eines C-Glieds sowie L-Glieds vorgesehen ist,
- Fig. 6: eine Ausgestaltung eines Serienschwingkreises zur Umsetzung der Spannungserhöhung gemäß der vorliegenden Erfindung,
- Fig. 7: eine weitere Ausgestaltung eines Serienschwingkreises zur Umsetzung der Spannungserhöhung gemäß der vorliegenden Erfindung,
- Fig. 8: eine Ausgestaltung eines Parallelkreises zur Umsetzung der Spannungserhöhung gemäß der vorliegenden Erfindung sowie
- Fig. 9: Ausgestaltung eines Pi-Filters zur Umsetzung der Spannungserhöhung gemäß der vorliegenden Erfindung.

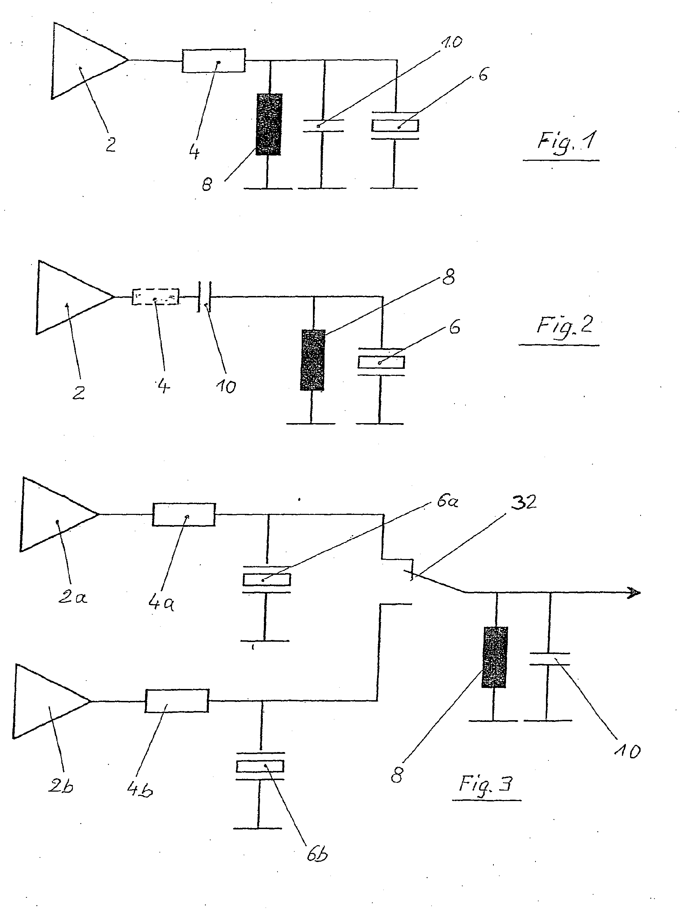

Gemäß Fig. 1 liefert ein Verstärker 2 an seinem Ausgang ein Ansteuersignal über einen Vorwiderstand 4 an einen Ultraschallwandler 6 und parallel zu diesem Ultraschallwandler liegt eine Resonanzschaltung in Form eines LC-Parallelschwingkreises mit einer Induktivität 8 und einer Kapazität 10. Dieser Schwingkreis filtert aus dem über den Vorwiderstand 4 gelieferten Signal eine seiner Resonanzfrequenz entsprechende Sinusschwingung heraus, die dann als Ansteuersignal am Ultraschallwandler 6 liegt, während Oberwellen des Sinussignals abgeleitet und vom Wandler 6 ferngehalten werden. Der geringe ohmsche Widerstand der die Induktivität 8 bildenden Spule stellt praktisch einen Kurzschluss für Gleichspannungskomponenten des Ansteuersignals über den Wandler 6 dar, so dass dieser erwünschtermaßen nur mit einem Wechselspannungssignal beaufschlagt wird.

Bei dem Ausführungsbeispiel gem. Fig. 2 ist die Resonanzschaltung als Reihen-LC-Schwingkreis ausgebildet, dessen Induktivität 8 wiederum parallel zum Ultraschallwandler 6 liegt, während die Kapazität 10. ebenso wie der Vorwiderstand 4 in der Zuleitung für das Ansteuersignal liegt. Auch dieser Reihenschwingkreis filtert das gewünschte Sinussignal zur Ansteuerung des Ultraschallwandlers 6 aus dem Ansteuersignal heraus, während unerwünschte Oberwellen unterdrückt werden.

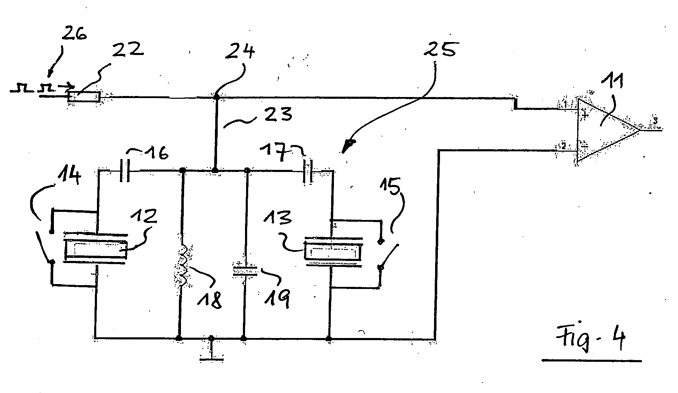

Das Ausführungsbeispiel gemäß Fig. 3 zeigt eine Möglichkeit der Mehrfachausnutzung ein und desselben Schwingkreises 8, 10 für mehrere Ultraschallwandler 6a, 6b mit Hilfe eines Umschalters 32. Je nach dessen Stellung ist der Schwingkreis 8, 10 an den Wandler 6a oder an den Wandler 6b geschaltet. Auf diese Weise lassen sich eine Spule und ein Kondensator einsparen und gleichzeitig die Trennung zwischen den beiden Wandlern verbessern. Außerdem verbessert sich die Symmetrie zwischen den beiden Wandlern, da sie beide denselben Schwingkreis benutzen.

Wenn der Verstärker 2 einen ausreichend hohen Ausgangswiderstand hat, kann der Vorwiderstand 4 ggf. eingespart werden.

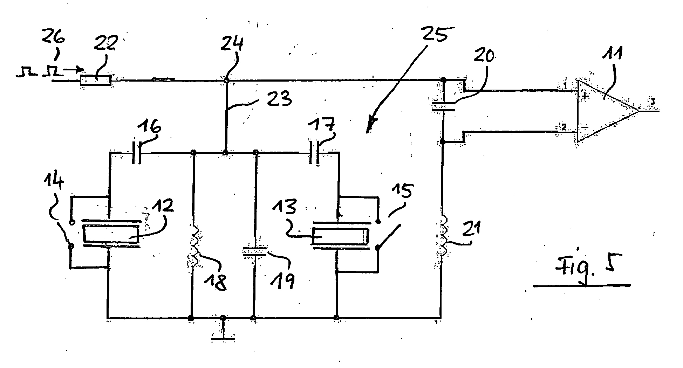

Fig. 4 zeigt, in schematisch vereinfachter Darstellung, eine Anordnung zur Signalverarbeitung, bei der ein mit der Bezugsziffer 25 gekennzeichnetes passives Netzwerk über eine T-Schaltung 23 zur Ansteuerung einer Ultraschallwandleranordnung vorgesehen ist. Die Signalleitung 26 ist über den Widerstand 22 an das Netzwerk 25 angeschlossen. Über die Signalleitung 26 wird von einem (nicht dargestellten) Signalgenerator vorzugsweise ein digitales Rechtecksignal zugeführt.

Das Netzwerk 25 ist mit der Signalleitung 26 verbunden und umfasst an seinen beiden Zweigen je ein C-Glied 16 bzw. 17 in symmetrischer Anordnung. Jedes C-Glied 16, 17 ist mit einem Wandler 12, 13 verbunden. Jeder der beiden vorbeschriebenen Schaltungsstränge umfasst eine Kurzschlussleitung zur Überbrückung des jeweiligen Wandlers 12, 13 mit einem darin befindlichen Schalter 14, 15. Die Schaltungsstränge des C-Glieds 16, des Wandlers 12 sowie des Schalters 14 sind zum Schaltungsstrang des C-Glieds 17, des Wandlers 13 sowie des Schalters 15 in dem T-förmigen Netzwerk 10 parallel geschaltet.

In der Verlängerung des senkrechten Zweigs der T-Schaltung 23 befindet sich ein weiteres C-Glied 19 sowie ein L-Glied 18, welche innerhalb des Netzwerks 25 ebenfalls parallel geschaltet sind.

Die Ausgestaltung der Anordnung gemäß Fig. 4 ermöglicht es, jeden Ultraschallwandler 12 bzw. 13 sowohl im Sende- als auch Empfangsbetrieb zu betreiben. Die Laufrichtung des Ultraschallsignals wird dadurch beeinflusst, dass während der Sendephase einer der beiden Ultraschallwandler 12 bzw. 13 durch Betätigung des jeweiligen Schalters 14 bzw. 15 kurzgeschlossen wird.

Bei der Darstellung der Ultraschallwandler handelt es sich um vereinfachte Darstellungen. Die Ultraschallwandler 12, 13 umfassen noch weitere passive Teile, die in der vereinfachten Darstellung gemäß Fig. 4 aus Gründen der Übersichtlichkeit nicht wiedergegeben sind.

Das gesamte Netzwerk 10 in Fig. 4 einschließlich der Impedanzen der Wandler 12 sowie 13 sind so dimensioniert, dass das Netzwerk 10 immer in Resonanz mit der Grundwelle des über die Signalleitung 26 kommenden, digitalen Rechteckansteuersignals ist. Dadurch wird der Oberwellenanteil des Rechtecksignals weitgehend unterdrückt, ein sinusförmiges Signal erzielt und hierdurch unerwünschte Schallwellen im Wasser vermieden.

Beim Übergang von der Sende- zur Empfangsphase wird der Kurzschluss von dem Ultraschallwandler, der die Signale empfangen soll, zu dem gegenüberliegenden Ultraschallwandler, der die Signale senden soll, getauscht. Auch in dieser Phase ist aufgrund der besonderen Ausgestaltung der Anordnung nach Fig. 4 das gesamte Netzwerk 25 in Resonanz für das einlaufende Ultraschallsignal.

Das mechanische Ultraschallsignal wird zunächst im empfangenen Ultraschallwandler in eine elektrische Spannung gewandelt, die das Netzwerk 25 speist. Das elektrische Signal wird durch eine Resonanztransformation des gesamten Netzwerkes 25 verstärkt dem Abgriffpunkt 24 der T-Schaltung 23 und damit einem Eingang des Komparators 11 zugeführt. Der weitere Eingang des Komparators 11 wird an ein Bezugspotenzial angeschlossen. Das Ausgangssignal aus dem Netzwerk 25 ist in diesem Fall im unsymmetrischen Modus.

Je nachdem welcher Strang des Netzwerkes 10 kurzgeschlossen ist, ist der jeweilige aktive Ultraschallwandler 12 bzw. 13 einschließlich seines zugehörigen C-Glieds 16 bzw. 17 in Parallelschaltung zu dem C-Glied 19, dem L-Glied 18 sowie dem das weitere C-Glied 16 bzw. 17 umfassenden, kurzgeschlossenen Strang des Netzwerks 10.

Die Ausgestaltung gemäß Fig. 5 ist im Vergleich zu der Ausgestaltung gemäß Fig. 4 dahingehend erweitert, dass der zweite Eingang des Komparators 11 über eine dem T-Glied 23 parallel geschaltete Serienschaltung bestehend aus einem C-Glied 20 sowie einem L-Glied 21 angesteuert ist. Auch hier ist das Netzwerk 25 inklusive der Impedanzen des ersten Ultraschallwandlers 12, des zweiten Ultraschallwandlers 13 sowie der Serienschaltung aus C-Glied 20 sowie L-Glied 21 so dimensioniert, dass das Netzwerk 25 immer in Resonanz mit der Grundwelle des digitalen Rechteckansteuersignals ist.

Die Serienschaltung des C-Glieds 20 und L-Glieds 21 ist als solche nicht auf die Ultraschallfrequenz abgestimmt. Sie bildet vielmehr abhängig von der Dimensionierung eine Induktivität sowie Kapazität, die parallel zu dem L-Glied 18 und C-Glied 19 des Netzwerkes 25 den gemeinsamen Querzweig des Netzwerks 10 bilden. In dieser Konfiguration hat die Serienschaltung aus C-Glied 20 und L-Glied 21 zum einen die Eigenschaft einer Spannungsverstärkung durch Impedanztransformation und zusätzlich die Eigenschaft, das Vorzeichen der Spannung am Ausgang des Komparators 11 zu konvertieren.

Durch entsprechende Dimensionierung des C-Glieds 20 sowie L-Glieds 21 ist es möglich, zwischen den Eingängen des Komparators 11 eine symmetrische Spannung zur Ansteuerung des Komparators 11 zu generieren und gleichzeitig die Gesamtamplitude der Eingangsspannung am Komparator 11 ohne aktive Verstärkung, d. h. lediglich mit passiven Elementen zu verdoppeln.

In beiden Schaltungsanordnungen der Figuren 4 und 5 bildet das Netzwerk 25 sowohl im Empfangs- als auch im Sendemodus ein Frequenz-, d. h. Bandfilter, welches auf die Ultraschallfrequenz abgestimmt ist. Hierdurch können externe Rausch- und Störeinflüsse herausgefiltert werden. Gleichzeitig wird durch die Verwendung des T-Glieds 23 und der symmetrischen Anordnung des Netzwerkes 25 eine Reziprozität der Anordnung gewährleistet.

In der Beschreibung der einzelnen Schaltungen gemäß den nachfolgenden Ausführungsbeispielen werden die Induktivitäten mit Ln, die Kapazitäten mit Cn und die Widerstände mit Rn bezeichnet.

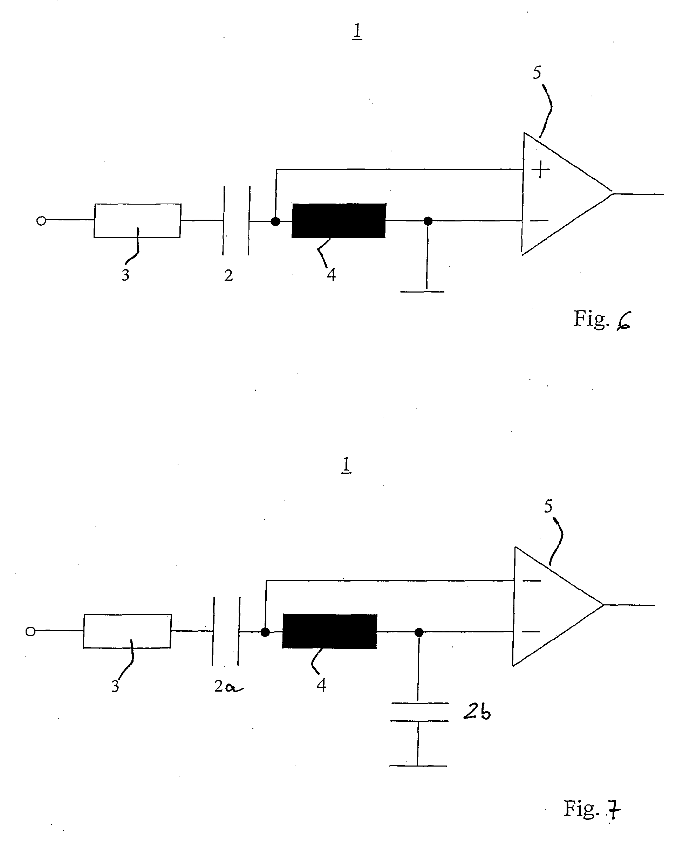

Fig. 6 zeigt einen Serienschwingkreis 1. Hier ist das DC-Eingangspotential des Komparators auf Masse bezogen, der Serienkreis besteht aus dem Widerstand 3 (R1), dem C-Glied 2 (C1) und L-Glied 4 (L1) und dem in Fig. 1 nicht dargestellten Innenwiderstand Ri der treibenden Spannungsquelle. Die Spannungsüberhöhung am L-Glied 4 ergibt sich als Quotient aus w0•L1/Rges. Das Kürzel w0 ist die Resonanzfrequenz des Kreises multipliziert mit 2•P1, Rges ist die Summe von R1+Ri+Rv, wobei Rv den Verlustwiderstand von C1 und L1 repräsentiert, der zu einem Widerstand in Serie zu R1 transformiert ist.

Fig. 7 ist im Prinzip gleich der Schaltung in Fig. 6 mit der Eigenschaft, dass hier das DC-Potential der Komparatoreingänge unabhängig von Masse gewählt werden kann. Hier ist die Serienschaltung der beiden C-Glieder 2 (C2a und C2b) frequenzbestimmend.

In Bezug auf die Rauschunterdrückung haben die Schaltungen nach Fig. 6 und Fig. 7 nicht die Eigenschaft eines Bandpasses sondern die eines Hochpasses, weil oberhalb der Resonanzfrequenz der positive Komparatoreingang immer stärker an die treibende Spannungsquelle angekoppelt wird und der negative Eingang praktisch an Masse liegt. Diese Schaltungen haben also oberhalb der Resonanzfrequenz keine Weitabselektion und als Rauschbandbreite ein Integral über einen Hochpass.

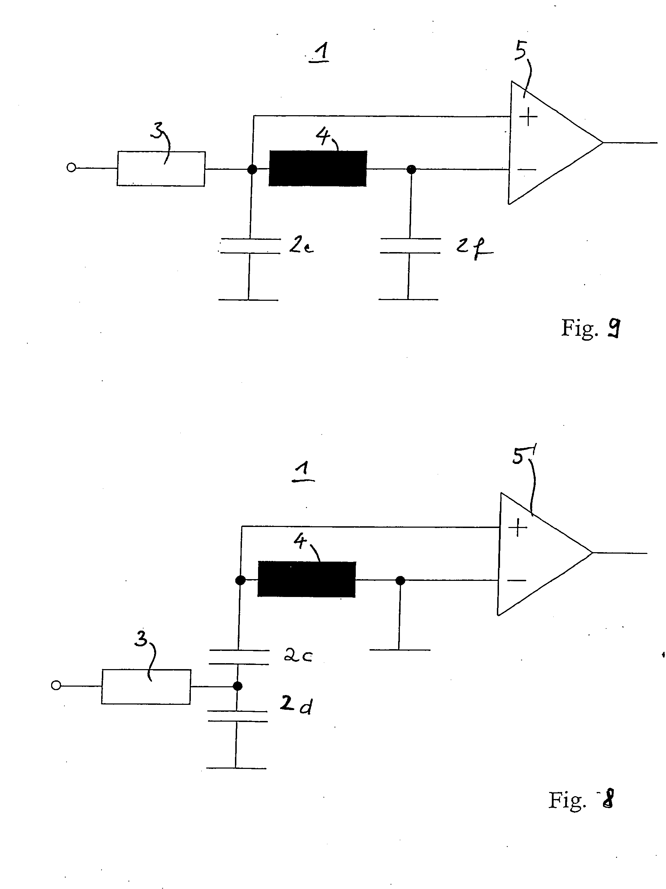

Fig. 8 zeigt einen Parallelkreis, der durch die beiden C-Glieder 2c und 2d zu einem Resonanztransformator wird. Das DC-Eingangspotential am Komparator 5 ist wie das L-Glied 4 (L3) auf Masse gelegt. Die Ausgänge sind wieder an den Anschlüssen des L-Glieds 4 (L3) angebracht. Die nicht dargestellte, treibende Spannungsquelle mit ihrem Innenwiderstand Ri ist über den Widerstand 3 (R3) an die Verbindung von 2c und 2d angeschlossen.

Auch hier sind wieder alle Verlustwiderstände zu berücksichtigen. Zweckmäßigerweise werden sie in einen äquivalenten Widerstand Rp parallel zu L3 umgerechnet. Mit der Dimensionierung des Widerstands 3 (R3) bei bekanntem Innenwiderstand Ri und bekanntem Rp und dem Verhältnis der C-Glieder 2c zu 2d kann hier eine in weiten Grenzen einstellbare Resonanz-Spannungstransformation vorgenommen werden. Die überhöhte Spannung tritt hier entsprechend am L-Glied 4 (L3) auf. Die Parallelschaltung kann schließlich auch durch einen Stromgenerator gespeist werden. Dann ist die Spannung am L-Glied 4 (L3) ein Produkt von Speisestrom mal Resonanzwiderstand. Im Falle einer Stromeinspeisung entfällt R3 und 2c mit 2d vereinfachen sich zu einer einzigen C-Glied-Funktionalität.

In Bezug auf die Rauschunterdrückung ist die Parallelschaltung der Serienschaltung überlegen, weil hier durch den die Parallelschaltung von L3 und 2c/2d ein echter Bandpass entsteht mit der Resonanzfrequenz im Maximum also Abbildung des komplexen Kreiswiderstandes. Die Rauschbandbreite ergibt sich hier aus dem Integral über diese Abbildung. Die Parallelschaltung hat somit eine Weitabselektion oberhalb und unterhalb der Resonanzfrequenz und somit eine weit geringere Rauschbandbreite.

Fig. 9 zeigt schließlich das Pi-Filter. Hier ist die Schaltung so konzipiert, dass als DC-Eingangspotential am Komparator 5 gleich das DC-Potential der treibenden Spannungsquelle genutzt wird, die über den Widerstand 3 (R4) mit dem L-Glied 4 (L4) und dem C-Glied 2 (2e) verbunden ist. Der Ausgang ist hier entsprechend mit den Anschlüssen von L4 verbunden.

Die Pi-Schaltung hat eine besondere nützliche Eigenschaft. Die überhöhte Spannung an der Verbindung L4/2e ist gegenphasig zu der Spannung an der Verbindung L4/2f. Im Prinzip können nun beide Komparatoreingänge bei Einstellung eines geeigneten DC-Potentials den vollen erlaubten Eingangsswing des Komparators nutzen, wobei dann durch den großen Gesamtspannungshub noch zusätzliche Rauschminderung eintritt. Die beiden Spannungen an den C-Gliedem 2 (2e und 2f) können aber auch gezielt in ihrer Amplitude unterschiedlich dimensioniert werden, das Verhältnis 2e zu 2f ist hier entscheidend. Die Resonanz-Spannungstransformation ist äquivalent zu der Schaltung in Fig. 8 zu dimensionieren.

In Bezug auf die Rauschunterdrückung sind hier die gleichen Eigenschaften wie bei der Parallelschaltung in Fig. 8 gegeben.

Zur exakten Analyse und Dimensionierung aller möglichen Schaltungen ist es zweckmäßig, die komplexe Vierpoltheorie zu verwenden. Damit sind alle Fakten wie Frequenzgang, Phasengang, Anpassungswiderstände und Spannungsverläufe an allen Bauteilen erschöpfend zu beschreiben und zu einer gewünschten Dimensionierung zu verwerten.

Es wird darauf hingewiesen, dass auch Kombinationen der vorstehend beschriebenen Erfindungen untereinander ausdrücklich vom Offenbarungsgehalt dieser Anmeldung umfasst sind.

### BEZUGSZEICHENLISTE

- 2: Verstärker
- 4: Vorwiderstand
- 6: Ultraschallwandler
- 8: Induktivität
- 10: Kapazität
- 32: Umschalter

- 1: Serienschwingkreis
- 2: C-Glied
- 3: Serienwiderstand
- 4: L-Glied
- 5: Komparator
- 6: Pi-Filter

- 11: Komparator
- 12: Ultraschallwandler
- 13: Ultraschallwandler
- 14: Schalter
- 15: Schalter
- 16: C-Glied
- 17: C-Glied
- 18: L-Glied
- 19: C-Glied
- 20: C-Glied
- 21: L-Glied
- 22: Widerstand
- 23: T-Schaltung
- 24: Abgriffpunkt
- 25: Netzwerk
- 26: Signalleitung

## Patentansprüche

1. Anordnung zur Ansteuerung von Ultraschallwandlern in Durchflussmessgeräten, bei welcher der Ultraschallwandler mit einem Sinussignal beaufschlagt wird,
**dadurch gekennzeichnet, dass**
der Ultraschallwandler (6) mit einer auf die Frequenz des Sinussignals abgestimmten Resonanzschaltung (8, 10) verbunden ist.

2. Anordnung nach Anspruch 1,
**dadurch gekennzeichnet, dass**
die Resonanzschaltung (8, 10) durch einen LC-Schwingkreis gebildet wird, zu dessen Induktivität (8) der Ultraschallwandler (6) parallel geschaltet ist.

3. Anordnung nach Anspruch 2,
**dadurch gekennzeichnet, dass**
der Schwingkreis als Parallelschwingkreis (8, 10) ausgebildet ist, zu dem der Ultraschallwandler (6) parallel liegt.

4. Anordnung nach Anspruch 2,
**dadurch gekennzeichnet, dass**
der Schwingkreis als Reihenschwingkreis (8, 10) ausgebildet ist, zu dessen Induktivität (8) der Ultraschallwandler (6) parallel liegt und dessen Kapazität (10) in der Zuleitung zur Ansteuerschaltung (2) liegt.

5. Anordnung nach einem der vorstehenden Ansprüche,
**gekennzeichnet durch**
einen in der Zuleitung zur Ansteuerschaltung (2) angeordneten Vorwiderstand (4).

6. Anordnung nach einem der vorstehenden Ansprüche,
**gekennzeichnet durch**
mehrere separat angesteuerte Ultraschallwandler (6a, 6b), die über einen Umschalter (12) wahlweise mit ein und demselben Schwingkreis (8, 10) verbunden werden können.

7. Anordnung zur Signalverarbeitung in einem Ultraschalldurchflussmesser nach dem Laufzeitprinzip, insbesondere nach einem der vorhergehenden Ansprüche 1 - 6,
**dadurch gekennzeichnet, dass**
zur Ansteuerung einer Wandleranordnung ein Netzwerk (25) vorgesehen ist, die Wandleranordnung einen ersten Ultraschallwandler (12) und einen zweiten Ultraschallwandler (13) umfasst,
Schaltmittel (14, 15) vorgesehen sind, mittels denen der erste und zweite Ultraschallwandler (12, 13) wahlweise entweder in einen Sendebetrieb oder Empfangsbetrieb schaltbar sind und
das Netzwerk (25) einen elektrischen Schwingkreis aufweist, der
im Sende- sowie im Empfangsbetrieb des jeweiligen Ultraschallwandlers (12 bzw. 13) als Frequenzfilter wirkt.

8. Anordnung nach Anspruch 7,
**dadurch gekennzeichnet, dass**
in dem Netzwerk (25) jedem Ultraschallwandler (12, 13) ein C-Glied (16 bzw. 17) zugeordnet ist und zudem ein L-Glied (18) vorgesehen ist, welches zusammen mit dem C-Glied (16 oder 17) je nach Schaltzustand einen Schwingkreis bildet.

9. Anordnung nach Anspruch 7 oder 8,
**dadurch gekennzeichnet, dass**
jedem Ultraschallwandler (12, 13) ein eigenes Schaltmittel (14 oder 15) zugeordnet ist.

10. Anordnung nach einem der Ansprüche 7 - 9,
**dadurch gekennzeichnet, dass**
das Netzwerk (25) über eine T-Schaltung (23) mit der Signalleitung (26) und einem Eingang des Komparators (11) in Verbindung steht, die Verlängerung des senkrechten Zweigs der T-Schaltung (23) das L-Glied (18) aufweist und der jeweilige quer verlaufende Teil der T-Schaltung (23) das C-Glied (16 oder 17), den Schalter (14 bzw. 15) sowie den zugehörigen Ultraschallwandler (12 bzw. 13) aufweist.

11. Anordnung nach Anspruch 10,
**dadurch gekennzeichnet, dass**
zusätzlich zum Netzwerk (25) ein weiteres C-Glied (19) vorgesehen ist, welches zum L-Glied (18) parallel geschaltet ist.

12. Anordnung nach den Ansprüchen 7 - 11,
**dadurch gekennzeichnet, dass**
das Netzwerk (25) so ausgelegt ist, dass es in Resonanz mit der Grundwelle eines Ansteuersignals des Netzwerks (25) von der Signalleitung (26) ist.

13. Anordnung nach den Ansprüchen 7 - 12,
**dadurch gekennzeichnet, dass**
die Anordnung derart dimensioniert ist, dass zur Ansteuerung des Komparators (11) eine symmetrische Spannung an den Eingängen des Komparators (11) anliegt und die Gesamtamplitude der Eingangsspannungen im Vergleich zur Eingangsspannung am Netzwerk (25) am Komparator (11) erhöht, vorzugsweise verdoppelt ist.

14. Anordnung nach den Ansprüchen 7 - 13,
**dadurch gekennzeichnet, dass**
eine Serienschaltung eines zusätzlichen C-Glieds (20) und eines zusätzlichen L-Glieds (21) vorgesehen ist, die vorgenannte Serienschaltung parallel zum C-Glied (19) und L-Glied (18) geschaltet sind und über die Serienschaltung der zweite Eingang des Komparators (11) angesteuert wird.

15. Ultraschalldurchflussmesser nach dem Laufzeitprinzip mit einer Messstrecke, Mittel zum Aussenden und Empfangen von Ultraschallsignalen, sowie Mittel zur Signalweiterverarbeitung der empfangenen Ultraschallsignale, insbesondere nach einem der vorhergehenden Ansprüche 1 - 14,
**dadurch gekennzeichnet, dass**
als Mittel zur Signalweiterverarbeitung der empfangenen Ultraschallsignale ein Schwingkreis vorgesehen ist und der Schwingkreis mit einem Komparator (5) in Verbindung steht.

16. Ultraschalldurchflussmesser nach Anspruch 15,
**dadurch gekennzeichnet, dass**
der Schwingkreis ein Serienschwingkreis (1) ist.

17. Ultraschalldurchflussmesser nach Anspruch 15 oder 16,
**dadurch gekennzeichnet, dass**
der Schwingkreis ein Parallelkreis ist.

18. Ultraschalldurchflussmesser nach einem der vorhergehenden Ansprüche,
**dadurch gekennzeichnet, dass**
der Schwingkreis ein Pi-Filter realisiert.

19. Ultraschalldurchflussmesser nach einem der vorhergehenden Ansprüche,
**dadurch gekennzeichnet, dass**
der Schwingkreis eine LC oder RLC-Schaltung realisiert.

20. Ultraschalldurchflussmesser nach Anspruch 19,
**dadurch gekennzeichnet, dass**
an einem Ende des L-Glieds (4) die Betriebsspannung anliegt.

21. Ultraschalldurchflussmesser nach einem der vorhergehenden Ansprüche,
**dadurch gekennzeichnet, dass**
an einem Ende des L-Glieds (4) ein DC-Vorspannungspotential anliegt.

22. Ultraschalldurchflussmesser nach einem der vorhergehenden Ansprüche,
**dadurch gekennzeichnet, dass**
mittels Schaltungsanalyse und/oder Dimensionierung der Bauteile die Resonanzfrequenz des Schwingkreises veränderbar ist.

23. Ultraschalldurchflussmesser nach Anspruch 22,
**dadurch gekennzeichnet, dass**
zur Veränderung der Resonanzfrequenz des Schwingkreises weitere C-Glieder zuschaltbar sind.
